# EUROPÄISCHE PATENTSCHRIFT

(11) **EP 2 982 564 B1**
(45) Veröffentlichungstag und Bekanntmachung des Hinweises auf die Patenterteilung: **12.04.2017**
(21) Anmeldenummer: 15175860.4
(22) Anmeldetag: 08.07.2015
(51) Int. Cl.: B60W 40/02, G05D 1/02, B62D 15/02

(54) **VERFAHREN ZUM UNTERSTÜTZEN EINES FAHRERS BEIM EINPARKEN EINES KRAFTFAHRZEUGS, FAHRERASSISTENZSYSTEM SOWIE KRAFTFAHRZEUG**
METHOD FOR SUPPORTING A DRIVER WHEN PARKING OF A MOTOR VEHICLE, DRIVER ASSISTANCE SYSTEM AND MOTOR VEHICLE
PROCÉDÉ D'ASSISTANCE D'UN CONDUCTEUR LORS DU STATIONNEMENT D'UN VÉHICULE AUTOMOBILE, SYSTÈME D'ASSISTANCE DE CONDUCTEUR ET VÉHICULE AUTOMOBILE

(30) Priorität: 18.07.2014 DE 102014110173
(43) Veröffentlichungstag der Anmeldung: 10.02.2016
(73) Patentinhaber: Valeo Schalter und Sensoren GmbH, 74321 Bietigheim-Bissingen (DE)
(72) Erfinder: Jecker, Nicolas, 74321 Bietigheim-Bissingen (DE); Jaya, Akhil Dheerendra, 74321 Bietigheim-Bissingen (DE)

(56) Entgegenhaltungen:
- DE-A1-102012 222 562
- JP-A- 2007 285 733
- JP-A- 2009 175 962
- JP-A- 2011 058 229

## Beschreibung

Die vorliegende Erfindung betrifft ein Verfahren zum Unterstützen eines Fahrers beim Einparken eines Kraftfahrzeugs. Darüber hinaus betrifft die vorliegende Erfindung ein Fahrerassistenzsystem für ein Kraftfahrzeug. Schlief3lich betrifft die vorliegende Erfindung ein Kraftfahrzeug mit einem solchen Fahrerassistenzsystem.

Das Interesse richtet sich vorliegend insbesondere auf Fahrerassistenzsysteme, welche den Fahrer beim Einparken des Kraftfahrzeugs in einen Parkplatz oder einen Stellplatz unterstützen. Aus dem Stand der Technik sind bereits Fahrerassistenzsysteme bekannt, welche mit Hilfe von entsprechenden Sensoren Parklücken bzw. freie Stellplätze erkennen können und den Fahrer beim Einparkvorgang unterstützen. Dabei kann der Fahrer sowohl beim Einparken in Längsparkpfätze als auch beim Einparken in Querparkplätze unterstützt werden. Darüber hinaus sind Fahrerassistenzsysteme bekannt, die das Kraftfahrzeug bei einem Einparkvorgang semi-autonom manövrieren. Hierbei übernimmt das Fahrerassistenzsystem die Lenkung des Kraftfahrzeugs und der Fahrer betätigt das Gaspedal und die Bremse. Ferner sind bereits Fahrerassistenzsysteme bekannt, die ein autonomes Manövrieren des Kraftfahrzeugs ermöglichen. Diese Systeme liegen derzeit nur als Prototyp vor oder gehen demnächst in Serie. Ziel ist es, ein Fahrerassistenzsystem bereitzustellen, das beispielsweise ein gesamtes Parkhaus oder einen Parkplatz autonom abfahren kann und das Kraftfahrzeug selbstständig parken kann.

Das Dokument DE102012222562 A1 ist als nächstliegender Stand der Technik nach dem Oberbegriff des Anspruchs 1 zu sehen.

Die DE 10 2010 023 162 A1 beschreibt ein Verfahren zum Unterstützen eines Fahrers eines Kraftfahrzeugs beim Einparken in eine Parklücke mithilfe einer Fahrerassistenzeinrichtung. Hierbei werden zunächst in einem Lernmodus Referenzdaten zu dem Umgebungsbereich des Kraftfahrzeugs erfasst, während das Kraftfahrzeug von dem Fahrer eingeparkt wird. In einem Betriebsmodus werden Sensordaten zu dem Umgebungsbereich erfasst und mit den Referenzdaten verglichen. Hiermit kann die aktuelle Position des Kraftfahrzeugs im Vergleich zu einer Referenzzielposition ermittelt werden.

Des Weiteren beschreibt die EP 2 292 497 A2 ein Verfahren zum Durchführen eines zumindest semi-autonomen Parkvorgangs eines Kraftfahrzeugs mittels einer Fahrerassistenzeinrichtung. Es wird eine Parklücke durch eine Sensoreinrichtung der Fahrerassistenzeinrichtung während einer Vorbeifahrt des Kraftfahrzeugs an der Parklücke erfasst. Abhängig von der erfassten Parklücke bestimmt eine Steuereinrichtung einen Bereich für eine Startposition für das Kraftfahrzeug, von welchem aus eine Parkbahn, die zumindest einem vorbestimmten Kriterium genügt, bestimmbar ist. Die Steuereinrichtung gibt den Parkvorgang erst dann frei, wenn sich ein vorbestimmter Referenzpunkt des Kraftfahrzeugs innerhalb des bestimmten Bereichs befindet.

Es ist Aufgabe der vorliegenden Erfindung, eine Lösung aufzuzeigen, wie bei einem Verfahren der eingangs genannten Gattung der Fahrer bei dem Einparken des Kraftfahrzeugs zuverlässiger unterstützt werden kann.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren zum Unterstützen eines Fahrers beim Einparken eines Kraftfahrzeugs umfasst das Positionieren des Kraftfahrzeugs auf einer Parkfläche, welche eine Mehrzahl von Stellplatzreihen jeweils mit einer Mehrzahl von Stellplätzen für das Kraftfahrzeug und eine Mehrzahl von Fahrgassen zum Anfahren der Stellplatzreihen aufweist, das Empfangen von Umfelddaten, weiche ein Umfeld zumindest einer der Fahrgassen beschreiben, mittels einer Empfangseinrichtung des Kraftfahrzeugs, das Ermitteln, ob die zumindest eine der Fahrgassen auf einer Seite oder auf beiden Seiten jeweils durch eine der Stellplatzreihen begrenzt ist, anhand der empfangenen Umfelddaten mittels einer Auswerteeinrichtung des Kraftfahrzeugs, das Ausgeben einer ersten Fahrtrajektorie für eine Fahrt entlang der zumindest einen Fahrgasse, insbesondere mittels einer Anzeigeeinrichtung des Kraftfahrzeugs, falls die zumindest eine der Fahrgassen auf beiden Seiten durch jeweils eine der Stellplatzreihen begrenzt ist, und das Ausgeben einer zweiten Fahrtrajektorie für eine Fahrt entlang der zumindest einen Fahrgasse, insbesondere mittels der Anzeigeeinrichtung, falls die zumindest eine Fahrgasse auf einer Seite durch eine der Stellplatzreihe begrenzt ist.

Mit dem vorliegenden Verfahren soll der Fahrer beim Einparken auf einer Parkfläche unterstützt werden. Die Parkfläche kann dabei im Freien oder in einem Parkhaus angeordnet sein. Die Parkfläche umfasst eine Mehrzahl von Stellplatzreihen, die wiederum eine Mehrzahl von Stellplätzen aufweisen. Die Stellplätze können insbesondere zum Querparken des Kraftfahrzeugs vorgesehen sein. Darüber hinaus sind auf der Parkfläche Fahrgassen vorgesehen, die befahren werden können, um die Stellplätze der Stellplatzreihen zu erreichen. Vorliegend wird das Kraftfahrzeug auf der Parkfläche positioniert. Es kann auch vorgesehen sein, dass das Kraftfahrzeug auf der Parkfläche bewegt wird. Weiterhin wird anhand von Umfelddaten überprüft, ob eine Fahrgasse auf einer oder auf beiden Seiten von Stellplatzreihen begrenzt ist. Wenn die Fahrgasse auf beiden Seiten von Stellplatzreihen begrenzt ist, wird eine erste Fahrtrajektorie ausgegeben. Ist die Fahrgassenseite nur durch eine Stellplatzreihe begrenzt, wird eine von der ersten Fahrtrajektorie verschiedene, zweite Fahrtrajektorie ausgeben. Dies ist beispielsweise der Fall, wenn die Fahrgasse auf der anderen Seite durch eine Wand, einen Zaun oder eine sonstige Bebauung begrenzt ist.

Der Erfindung liegt die Erkenntnis zugrunde, dass bei einer Fahrt auf einer Fahrgasse, die an beiden Seiten von Stellplatzreihen begrenzt ist, in beiden Stellplatzreihen ein freier Stellplatz vorliegen kann. Im Vergleich dazu kann bei einer Fahrgasse, die nur auf einer Seite von einer Stellplatzreihe begrenzt ist, nur ein freier Stellplatz auf der Seite der Stellplatzreihe vorliegen. Durch die Vorgabe von zwei unterschiedlichen Fahrtrajektorien kann beispielsweise ein späterer Parkvorgang, bei dem das Kraftfahrzeug in einen freien Stellplatz einer der Stellplatzreihen eingeparkt wird, erleichtert werden.

Bevorzugt verläuft die erste Fahrtrajektorie zumindest abschnittsweise mittig zwischen den Stellplatzreihen. Wenn das Kraftfahrzeug mittig durch die Fahrgassen geleitet wird, können beiden Stellplatzreihen in gleicher Weise auf das Vorhandensein eines freien Stellplatzes hin überprüft werden. Zudem können ausgehend von dieser mittigen Fahrtrajektorie freie Stellplätze in beiden Stellplatzreihe angefahren werden. Dabei kann es auch vorgesehen sein, dass die erste Fahrtrajektorie nach dem Auffinden eines freien angepasst wird. Beispielsweise kann die erste Fahrtrajektorie in Richtung des Stellplatzes hin verschoben werden. Damit kann eine geeignete Startposition für einen Einparkvorgang ermöglicht werden. Somit kann ein umständliches und zeitaufwändiges Rangieren vermieden werden.

Weiterhin ist es vorteilhaft, wenn die zweite Fahrtrajektorie im Vergleich zur ersten Fahrtrajektorie zumindest abschnittsweise einen geringeren Abstand zu der einen der Stellplatzreihen aufweist. Hierbei kann berücksichtigt werden, dass die Position eines potentiellen freien Stellplatzes bezüglich der Fahrgasse bekannt ist. Dadurch, dass sich die zweite Fahrtrajektorie im Vergleich zu ersten Fahrtrajektorie näher an der Stellplatzreihe befindet, kann beispielsweise ein Rückwärtseinparken in den freien Stellplatz erleichtert werden.

Bevorzugt werden die Umfelddaten, von zumindest einem Umfeldsensor des Kraftfahrzeugs bereitgestellt. Der zumindest eine Umfeldsensor kann beispielsweise als Kamera ausgebildet sein, die eine Bildsequenz des Umfelds der zumindest einen Fahrgasse bereitstellen kann. Anhand einer geeigneten Bildverarbeitungseinrichtung kann - beispielsweise durch Objekterkennung - ermittelt werden, ob die zumindest eine Fahrgasse einseitig oder beidseitig durch Stellplatzreihen begrenzt ist. Darüber hinaus ist es auch denkbar, dass der zumindest eine Umfeldsensor als LiDAR (Light Detection And Ranging), Laserscanner, Ultraschallsensor und/oder Radarsensor ausgebildet ist. Auf diese Weise kann das Umfeld der zumindest einer Fahrgasse zuverlässig überprüft werden.

Alternativ oder zusätzlich kann es vorgesehen sein, dass die Umfelddaten, in einer externen Datenbank gespeichert sind und zu der Empfangseinrichtung des Kraftfahrzeugs übertragen werden. Auf der externen Datenbank kann beispielsweise eine digitale Karte der Parkfläche hinterlegt sein. In dieser digitalen Karte können insbesondere die einzelnen Stellplatzreihen und die einzelnen Fahrgassen sowie deren Anordnung zueinander hinterlegt sein. Es ist denkbar, dass alleine anhand der Umfelddaten, die von der externen Datenbank bereitgestellt werden, ermittelt wird, ob die Fahrgasse einseitig oder beidseitig durch eine Stellplatzreihe begrenzt ist. Die Daten der externen Datenbank können aber auch dazu genutzt werden, die Daten, die mit dem Umfeldsensor erfasst werden, zu plausibilisieren.

Weiterhin hat es sich als vorteilhaft erwiesen, wenn zusätzlich zu den Umfelddaten Positionsdaten eines satellitengestützten Positionsbestimmungssystems berücksichtigt werden. Anhand eines globalen satellitengestützten Positionsbestimmungssystems (z. B. GPS) kann die Position des Kraftfahrzeugs zuverlässig ermittelt werden. Diese Daten können berücksichtigt werden, um die Umfelddaten, die von zumindest einem Umfeldsensor bereitgestellt werden, zu plausibilisieren. Die Positionsdaten können auch zum Abgleich mit der digitalen Karte, die beispielsweise auf der externen Datenbank hinterlegt ist, verwendet werden.

In einer bevorzugten Ausführungsform wird das Kraftfahrzeug auf der Parkfläche bewegt und die erste und/oder die zweite Fahrtrajektorie werden vor einem Einfahren des Kraftfahrzeugs in die zumindest eine Fahrgasse ausgegeben. Der Fahrer kann beispielsweise sein Kraftfahrzeug auf einer Hauptfahrgasse bewegen, von der mehrere Fahrgassen abzweigen. Anhand der Umfelddaten kann bereits vor dem Zeitpunkt, zu dem das Kraftfahrzeug eine bestimmte Fahrgasse erreicht hat, ermittelt werden, ob diese einseitig oder beidseitig durch Stellplätze begrenzt ist. So kann dem Fahrer bereits vor dem Einfahren in die zumindest eine Fahrgasse die erste oder die zweite Fahrtrajektorie vorgeschlagen werden.

In einer vorzugsweisen Ausführungsform wird die erste und/oder zweite Fahrtrajektorie mittels einer Anzeigeeinrichtung des Kraftfahrzeugs ausgegeben. In einer Ausführungsform werden die erste und/oder die zweite Fahrtrajektorie dem Fahrer des Kraftfahrzeugs akustisch und/oder visuell ausgegeben, insbesondere mittels der Anzeigeeinrichtung. Beispielsweise kann eine entsprechende Sprachausgabe vorgesehen sein, die dem Fahrer im Innenraum des Kraftfahrzeugs wiedergegeben wird und die ihn darauf hinweist, wie er in eine der Fahrgassen einfahren soll. Weiterhin kann es vorgesehen sein, dass dem Fahrer auf einer Anzeigevorrichtung des Kraftfahrzeugs eine entsprechende optische Ausgabe dargestellt wird. Beispielsweise kann dem Fahrer ein entsprechender Pfeil angezeigt werden, welcher die erste oder die zweite Fahrtrajektorie vorgibt. Somit kann der Fahrer zuverlässig beim Führen des Kraftfahrzeugs unterstützt werden.

Bevorzugt wird in Abhängigkeit von der ersten und/oder der zweiten Fahrtrajektorie ein Steuersignal an eine Lenkeinrichtung, eine Antriebseinrichtung und/oder eine Bremsanlage des Kraftfahrzeugs gesendet. Anhand der ersten und/oder der zweiten Fahrtrajektorie kann ein Lenkeingriff vorgenommen werden. So kann das Kraftfahrzeug mittig in der Fahrgasse bewegt werden, wenn die Fahrgasse beidseitig von Stellplatzreihen begrenzt ist. Wenn die Fahrgasse nur einseitig von einer Stellplatzreihe begrenzt ist, kann das Kraftfahrzeug im Vergleich zu einer mittigen Fahrtrajektorie näher an der Stellplatzreihe bewegt werden. Des Weiteren kann es vorgesehen sein, dass einen Antriebsmotor und/oder eine Bremsanlage so angesteuert werden, dass das Kraftfahrzeug entweder entlang der ersten Fahrtrajektorie oder der zweiten Fahrtrajektorie entlang der Fahrgasse autonom fährt.

Bevorzugt wird das Kraftfahrzeug in Abhängigkeit von der ersten und/oder der zweiten Fahrtrajektorien semi-autonom manövriert. Hierbei kann es insbesondere vorgesehen sein, dass das Fahrerassistenzsystem in die Lenkung des Kraftfahrzeugs eingreift und der Fahrer das Gaspedal und das Bremspedal selbst betätigt. Somit kann der Fahrer beim Aufsuchen eines Parkplatzes anhand der Lenkvorgabe entlang der ersten oder der zweiten Fahrtrajektorie zuverlässig unterstützt werden.

Weiterhin ist es vorteilhaft, wenn das Kraftfahrzeug in Abhängigkeit von der ersten und/oder der zweiten Fahrtrajektorie autonom manövriert wird. Hierbei kann es vorgesehen sein, dass der Fahrer das Kraftfahrzeug an einem vorbestimmten Punkt, beispielsweise der Einfahrt der Parkfläche, abstellt und das Kraftfahrzeug durch das Fahrerassistenzsystem autonom zu einem freien Stellplatz manövriert und dort abgestellt wird. Anhand der ersten und/oder der zweiten Fahrtrajektorie kann eine optimale Strategie für das Auffinden eines Parkplatzes bereitgestellt werden, wenn das Kraftfahrzeug beispielsweise der Reihe nach Fahrgassen durchfährt, die beidseitig von Stellplätzen begrenzt sind.

Ein erfindungsgemäßes Fahrerassistenzsystem für ein Kraftfahrzeug ist dazu ausgebildet, das erfindungsgemäße Verfahren durchzuführen. Insbesondere umfasst das Fahrerassistenzsystem eine Empfangseinrichtung zum Empfangen von Umfelddaten, eine Auswerteeinrichtung zum Auswerten der empfangenen Umfelddaten und eine Anzeigeeinrichtung zum Ausgeben der ersten und/oder der zweiten Fahrtrajektorie. Zudem kann das Fahrerassistenzsystem eine Steuereinrichtung zum Ausgeben des Steuersignals aufweisen, mit dem die Lenkung, der Antrieb und/oder die Bremse des Kraftfahrzeugs angesteuert werden können.

Ein erfindungsgemäßes Kraftfahrzeug umfasst das erfindungsgemäße Fahrerassistenzsystem.

Die in Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweiligen angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung eine Draufsicht auf ein Kraftfahrzeug, weiches ein Fahrerassistenzsystem umfasst;
- Fig. 2: eine schematische Darstellung einer Parkfläche, die eine Mehrzahl von Stellplatzreihen und Fahrgassen umfasst; und
- Fig. 3: ein Flussdiagramm eines Verfahrens gemäß einer Ausführungsform der Erfindung.

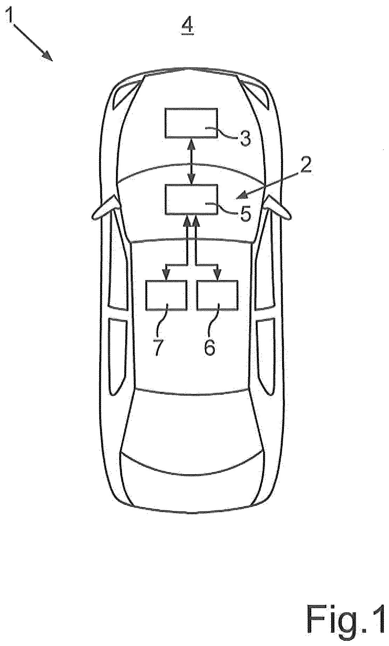

Fig. 1 zeigt ein Kraftfahrzeug gemäß einer Ausführungsform der vorliegenden Erfindung. Das Kraftfahrzeug 1, welches vorliegend als Personenkraftwagen ausgebildet ist, umfasst ein Fahrerassistenzsystem 2. Das Fahrerassistenzsystem 2 umfasst wiederum eine Empfangseinrichtung 3. Die Empfangseinrichtung 3 ist dazu ausgebildet, Umfelddaten des Kraftfahrzeugs 1 zu empfangen. Diese Umfelddaten können beispielsweise von einem hier nicht dargestellten Umfeldsensor des Kraftfahrzeugs 1 bereitgestellt werden. Als Umfeldsensor können beispielsweise eine oder mehrere Kameras vorgesehen sein, die an der Außenseite des Kraftfahrzeugs 1 angeordnet sind. Mit einer solchen Kamera kann eine Bildsequenz des Umfelds 4 des Kraftfahrzeugs 1 bereitgestellt werden. Darüber hinaus können als Umfeldsensor zumindest ein Ultraschallsensor, zumindest ein LiDAR, zumindest ein Laserscanner und/oder zumindest ein Radarsensor verwendet werden.

Anstelle der Umfelddaten zumindest eines Umfeldsensors können mit der Empfangseinrichtung 3 auch Umfelddaten von einer externen Datenbank empfangen werden. Die Umfelddaten können beispielsweise über eine drahtlose Datenverbindung von der externen Datenbank zu der Empfangseinrichtung 3 übertragen werden. Hierfür kann die Empfangseinrichtung 3 einen entsprechenden Empfänger aufweisen.

Des Weiteren umfasst das Fahrerassistenzsystem 2 eine Auswerteeinrichtung 5, die mit der Empfangseinrichtung 3 zur Datenübertragung verbunden ist. Mit der Auswerteeinrichtung 5 können die mit der Empfangseinrichtung 3 empfangenen Umfelddaten, entsprechend ausgewertet werden. Darüber hinaus umfasst das Fahrerassistenzsystem 2 eine Anzeigeeinrichtung 6, die beispielsweise über ein entsprechendes Datenkabel mit der Auswerteeinrichtung 5 verbunden ist. Mit der Anzeigeeinrichtung 6 kann anhand der mit der Auswerteeinrichtung 5 ausgewerteten Umfelddaten eine entsprechende Ausgabe erfolgen. Beispielsweise kann dem Fahrer auf der Anzeigeeinrichtung 6 eine optische Ausgabe ausgegeben werden, Alternativ dazu kann die Anzeigeeinrichtung 6 derart ausgebildet sein, dass mit ihr ein akustisches Signal ausgegeben werden kann. Ferner ist es denkbar, dass mit der Anzeigeeinrichtung 6 ein haptisches Signal ausgegeben wird.

Des Weiteren umfasst das Fahrerassistenzsystem 2 eine Steuereinrichtung 7, die ebenfalls mit der Auswerteeinrichtung 5 in Datenkommunikation steht. Mit der Steuereinrichtung 7 kann ein entsprechendes Steuersignal an die Lenkung und/oder eine Antriebseinrichtung und/oder eine Bremseinrichtung des Kraftfahrzeugs ausgegeben werden. Somit kann anhand der mit der Auswerteeinrichtung 5 bearbeitenden Umfelddaten mittels der Steuereinrichtung 7 ein entsprechendes Steuersignal ausgegeben werden. Durch dieses Steuersignal kann das Kraftfahrzeug 1 beispielsweise zumindest semi-autonom manövriert werden.

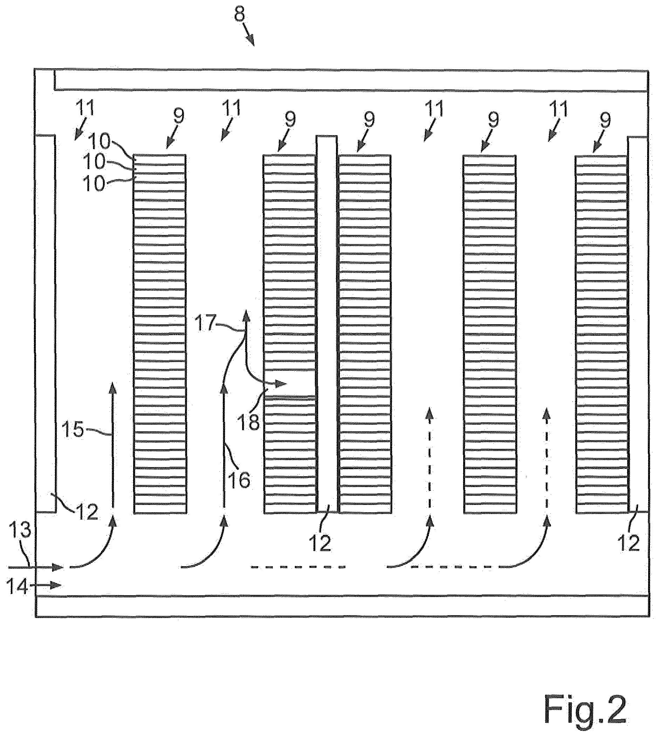

Fig. 2 zeigt eine schematische Darstellung einer Parkfläche 8 in einer Draufsicht. Die Parkfläche 8 umfasst eine Mehrzahl von Stellplatzreihen 9, die vorliegend parallel zueinander angeordnet sind. Jede der Stellplatzreihen 9 umfasst eine Mehrzahl von Stellplätzen 10. Die Stellplätze 10 sind vorliegend als Querparkplätze ausgebildet und dienen dem Abstellen eines Kraftfahrzeugs 1. Vorliegend sind die Stellplätze 10 in der jeweiligen Stellplatzreihe 9 nebeneinander angeordnet. Des Weiteren umfasst die Parkfläche 8 eine Mehrzahl von Fahrgassen 11. Auf den jeweiligen Fahrgassen 11 kann der Fahrer das Kraftfahrzeug 1 bewegen, wenn er zu einem der Stellplätze 10 gelangen möchte. Die Fahrgassen 11 sind dabei derart ausgebildet, dass die jeweiligen Stellplätze 10 senkrecht zu der Haupterstreckungsrichtung der Fahrgasse 11 angeordnet sind. Darüber hinaus umfasst die Parkfläche 8 eine Mehrzahl von Wänden 12.

Durch einen Pfeil 13 ist die Fahrt des Kraftfahrzeugs 1 auf einer Hauptfahrgasse 14 verdeutlicht. Von der Hauptfahrgasse 14 zweigen die Fahrgassen 11 ab. In dem vorliegenden Ausführungsbeispiel sind die Fahrgassen 11 senkrecht zu der Hauptfahrgasse 14 angeordnet. Mit zumindest einem Umfeldsensor des Kraftfahrzeugs 1 wird das Umfeld 5 des Kraftfahrzeugs 1 auf der Fahrt entlang der Hauptfahrgasse 14 erfasst. Insbesondere kann das Umfeld einer der Fahrgassen 11 erfasst werden. Zu diesem Zweck können - wie bereits zuvor erwähnt - die Daten zumindest einer Kamera, zumindest eines Ultraschallsensors, zumindest eines LiDARs, zumindest eines Laserscanners und/oder zumindest eines Radarsensors verwendet werden. Anhand der Umfelddaten, kann durch die Auswertung mit der Auswerteeinrichtung 5 erkannt werden, ob die Fahrgasse 11 auf beiden Seiten durch eine Stellplatzreihe 9 begrenzt ist oder nicht. Es kann beispielsweise der Fall sein, dass eine der Fahrgassen 11 nur auf einer Seite durch eine Stellplatzreihe 9 begrenzt ist. Dies ist vorliegend bei der linken Fahrgasse 11 der Fall, die auf einer Seite durch die Wand 12 begrenzt ist.

Anstelle der Daten der Umfeldsensoren können auch Umfelddaten von der externen Datenbank an die Empfangseinrichtung 3 übertragen werden. In den Umfelddaten der externen Datenbank kann beispielsweise eine digitale Karte der Parkfläche hinterlegt sein, in der die Anordnung der Stellplatzreihen 9, der Fahrgassen 11 und der Wände 12 gekennzeichnet ist. Darüber hinaus können die Daten eines satellitenbasierten Positionsbestimmungssystems berücksichtigt werden. Wenn die Parkfläche 8 in einem Parkhaus angeordnet ist, in dem der Satellitenempfang nicht oder nur eingeschränkt zur Verfügung steht, kann die sogenannte "Indoor-Navigation" genutzt werden. Dazu können Daten des satellitengestützten Positionsbestimmungssystems extrapoliert werden. Zu diesem Zweck können auch die Daten eines Fahrgeschwindigkeitssensors und/oder eine Lenkwinkelsensors berücksichtigt werden. Darüber hinaus kann die Position des Kraftfahrzeugs 1 in dem Parkhaus durch ein drahtloses Kommunikationssystem bestimmt werden.

Anhand der Umfelddaten, die von der Empfangseinrichtung 3 empfangen werden, kann nun die Auswerteeinrichtung 5 ermitteln, ob eine der Fahrgassen 11 auf einer oder auf beiden Seiten durch eine Stellplatzreihe 9 begrenzt ist. Zu diesem Zweck können beispielsweise entsprechende Referenzdaten in einem Speicher der Auswerteeinrichtung 5 hinterlegt sein, die mit den empfangenen Umfelddaten verglichen werden. Wenn die Fahrgasse 11 auf beiden Seiten durch eine Stellplatzreihe 9 begrenzt ist, wird eine erste Fahrtrajektorie 16 ausgegeben. Falls die Fahrgasse 11 nur auf einer Seite durch eine Stellplatzreihe 9 begrenzt ist, wird eine von der ersten Fahrtrajektorie 16 verschiedene, zweite Fahrtrajektorie 15 ausgegeben. Die Fahrtrajektorien 15, 16 sind in Fig. 2 beispielhaft durch einen jeweiligen Pfeil verdeutlicht. Die Ausgabe der Fahrtrajektorien 15, 16 erfolgt beispielsweise auf der Anzeigeeinrichtung 6 des Kraftfahrzeugs 1.

Somit kann dem Fahrer durch die erste und/oder die zweite Fahrtrajektorie 15, 16 ein Hinweis ausgegeben werden, wie er in die Fahrgasse 11 einbiegen soll, die beidseitig durch Stellplatzreihen 9 begrenzt ist. Zusätzlich kann mit der Steuereinrichtung 7 anhand der ersten und/oder der zweiten Fahrtrajektorie 15, 16 ein entsprechendes Steuersignal an eine Lenkeinrichtung und/oder eine Antriebseinrichtung und/oder eine Bremseinrichtung des Kraftfahrzeugs 1 ausgegeben werden. Auf diese Weise kann das Kraftfahrzeug 1 zumindest semi-autonom auf der Parkfläche 8 manövriert werden.

Alternativ können die erste und/oder zweite Fahrtrajektorie aber auch direkt zum semiautonomen oder (voll-)autonomen Manövrieren benutzt werden, ohne sie dem Fahrer vorher mittels einer Anzeigeeinrichtung auszugeben.

Die erste Fahrtrajektorie 16 verläuft dabei zumindest abschnittsweise mittig innerhalb der Fahrgasse 11. Die zweite Trajektorie 15 verläuft im Vergleich zu der ersten Fahrtrajektorie 16 näher an der Stellplatzreihe 9. Wenn eine Fahrgasse 11 nur auf einer Seite durch eine Stellplatzreihe 9 begrenzt ist, kann sich ein freier Stellplatz 18 nur in dieser Stellplatzreihe 9 befinden. Die zweite Fahrtrajektorie 15 ist dabei so gewählt, dass ausgehend von einem Startpunkt auf der zweiten Fahrtrajektorie 15 ein Einparkvorgang in den freien Stellplatz 18 beispielsweise in einem Zug bzw. ohne ein zusätzliches Rangieren ermöglicht werden kann. Zudem kann eine Kollision des Kraftfahrzeugs 1 mit der Wand 12 während des Einparkvorgangs vermieden werden. Im vorliegenden Ausführungsbeispiel ist die zweite Fahrtrajektorie 15 für ein Rückwärtseinparken in den freien Stellplatz 18 vorbestimmt. Wenn vorwärts in den freien Stellplatz 18 eingeparkt werden soll, kann die zweite Fahrtrajektorie 15 entsprechend angepasst werden.

Ausgehend von der ersten Fahrtrajektorie 16 können bei einer Fahrt auf der Fahrgasse 11 beide Stellplatzreihen 9 auf freie Stellplätze 18 hin überprüft werden. Wenn das Kraftfahrzeug 1 beispielsweise Umfeldsensoren aufweist, die das Umfeld 4 des Kraftfahrzeugs 1 auf beiden Seiten erfassen können, können beide Stellplatzreihen 9 gleichzeitig auf das Vorhandensein eines freien Stellplatzes 18 untersucht werden. Wenn ein freier Stellplatz 18 aufgefunden wurde, kann die erste Fahrtrajektorie 16 entsprechend angepasst werden. Eine solche angepasste Fahrtrajektorie 17 ist beispielhaft in Fig. 2 dargestellt. Die erste Fahrtrajektorie 16 wird vorliegend derart angepasst, dass sie zu der Stellplatzreihe 9 hin verschoben wird, welche den freien Stellplatz 18 aufweist. Die angepasst Fahrtrajektorie 17 verläuft parallel zur Haupterstreckungsrichtung der Fahrgasse 11. Ausgehend von der angepassten Fahrtrajektorie 17 kann das zumindest semi-autonome Rückwärtseinparken in den freien Stellplatz 18 einfacher durchgeführt werden.

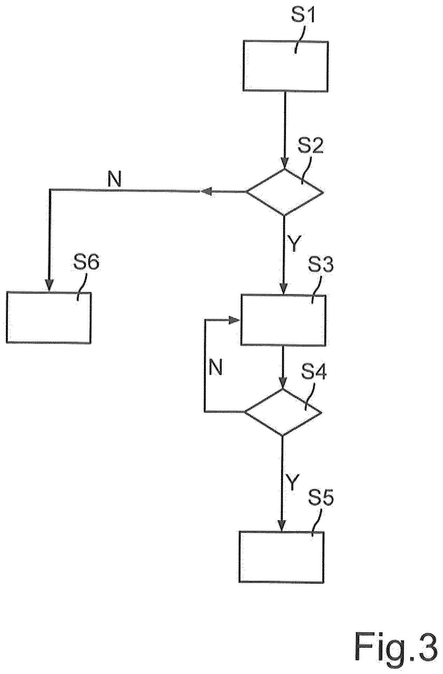

Das Ablaufdiagramm gemäß Fig. 3 verdeutlicht, wie das Kraftfahrzeug 1 auf der Parkfläche 8 manövriert werden kann. Dabei kann dem Fahrer durch die erste, die zweite und/oder die angepasste Fahrtrajektorie 15, 16, 17 ein Hinweis ausgegeben werden, wie er das Kraftfahrzeug 1 während der Fahrt auf der Parkfläche 8 manövrieren soll. Alternativ dazu kann es vorgesehen sein, dass das Kraftfahrzeug 1 mittels des Fahrerassistenzsystems 2 zumindest semi-autonom anhand der Fahrtrajektorien 15, 16, 17 manövriert wird.

In einem ersten Schritt S1 wird das Kraftfahrzeug 1 entlang einer vorbestimmten Bahn, beispielsweise auf der Hauptfahrgasse 14, bewegt. Bei der Fahrt entlang dieser Bahn wird kontinuierlich überprüft, ob anhand der Umfelddaten eine Fahrgasse 11 im Umfeld des Kraftfahrzeugs 1 erfasst wird. Zu diesem Zweck können die mit der Empfangseinrichtung 3 empfangenen Umfelddaten mit der Auswerteeinrichtung 5 entsprechend ausgewertet werden. Wenn eine Fahrgasse 11 erkannt wird, wird in einem Schritt S2 überprüft, ob diese Fahrgasse 11 beidseitig von Stellpfatzreihen 9 begrenzt ist.

Wenn eine Fahrgasse 11 erfasst wird, die von zwei Stellplatzreihen 9 umgeben ist, wird das Verfahren in dem Schritt S3 fortgeführt. In diesem Fall wird die erste Fahrtrajektorie 16 ausgegeben. Diese kann dem Fahrer mittels der Anzeigeeinrichtung 7 angezeigt werden. Alternativ dazu kann das Kraftfahrzeug 1 zumindest semi-autonom derart manövriert, dass das Kraftfahrzeug 1 in diese Fahrgasse 11 einbiegt.

Anschließend wird in einem Schritt S4 überprüft, ob ein freier Stellplatz 18 in einer der Stellplatzreihen 9 gefunden wurde. Zum Auffinden eines freien Stellplatzes 10 können die Umfeldsensoren des Kraftfahrzeugs 1 verwendet werden, mit denen die beiden Stellplatzreihen 9, die die Fahrgasse 11 begrenzen, überwacht werden. Wenn ein freier Stellplatz 10 gefunden wurde, wird die erste Fahrtrajektorie 16 derart angepasst, dass sich die angepasst Fahrtrajektorie 17 ergibt. Das Kraftfahrzeug 1 wird entlang der angepassten Fahrtrajektorie 17 bewegt und bezüglich des freien Stellplatzes 18 positioniert. Ausgehend von einem Startpunkt auf der angepassten Fahrtrajektorie 17 wird das Kraftfahrzeug 1 in den freien Stellplatz 18 eingeparkt. Das Einparken des Kraftfahrzeugs 1 in den freien Stellplatz 18 kann durch den Fahrer erfolgen. Alternativ dazu kann das Einparken zumindest semi-autonom erfolgen.

Wenn bei der Abfrage in Schritt S2 keine Fahrgasse 11, die beidseitig durch eine Stellplatzreihe 9 begrenzt ist, ermittelt wurde, wird das Verfahren in dem Schritt S6 fortgeführt. Hierbei wird das Kraftfahrzeug 1 zu einer Fahrgasse 11 manövriert, die nur einseitig durch eine Stellplatzreihe 9 begrenzt ist. In dieser Fahrgasse 11 das Kraftfahrzeug 1 entlang der zweiten Fahrtrajektorie 15 bewegt. Anschließen wird die Stellplatzreihe 9 auf freie Stellplätze 18 hin überprüft und das Kraftfahrzeug 1 gegebenenfalls in den freien Stellplatz 18 eingeparkt.

Durch das Verfahren kann eine optimale Strategie für das zumindest semi-autonome Manövrieren eines Kraftfahrzeugs 1 bei der Parkplatzsuche bereitgestellt werden. Das Verfahren kann in gleicher Weise für Parkflächen 8 verwendet werden, bei denen die Anordnung der Stellplatzreihen 9 und der Fahrgassen 11 von der gemäß dem Ausführungsbeispiel von Fig. 2 abweicht. Das Verfahren kann zudem für Stellplatzreihen 9 verwendet werden, bei denen die Stellplätze 10 zum Längsparken ausgebildet sind.

## Patentansprüche

1. Verfahren zum Unterstützen eines Fahrers beim Einparken eines Kraftfahrzeugs (1) mit den Schritten:
- Positionieren des Kraftfahrzeugs (1) auf einer Parkfläche (8), welche eine Mehrzahl von Stellplatzreihen (9) jeweils mit einer Mehrzahl von Stellplätzen (10) für das Kraftfahrzeug (1) und eine Mehrzahl von Fahrgassen (11) zum Anfahren der Stellplatzreihen (9) aufweist (S1),
- Empfangen von Umfelddaten, welche ein Umfeld (4) zumindest einer der Fahrgassen (11) beschreiben, mittels einer Empfangseinrichtung (3) des Kraftfahrzeugs (1), **gekennzeichnet durch** folgende weitere Schritte
- Ermitteln, ob die zumindest eine der Fahrgassen (11) auf einer Seite oder auf beiden Seiten jeweils **durch** eine der Stellplatzreihen (9) begrenzt ist, anhand der empfangenen Umfelddaten mittels einer Auswerteeinrichtung (5) des Kraftfahrzeugs (1) (S2),
- Ausgeben einer ersten Fahrtrajektorie (16) für eine Fahrt entlang der zumindest einen Fahrgasse (11), falls die zumindest eine der Fahrgassen (11) auf beiden Seiten **durch** jeweils eine der Stellplatzreihen (9) begrenzt ist, und
- Ausgeben einer zweiten Fahrtrajektorie (15) für eine Fahrt entlang der zumindest einen Fahrgasse (11), falls die zumindest eine Fahrgasse (11) auf einer Seite **durch** eine der Stellplatzreihe (9) begrenzt ist.

2. Verfahren nach Anspruch 1,
**dadurch gekennzeichnet, dass**
die erste Fahrtrajektorie (16) zumindest abschnittsweise mittig zwischen Stellplatzreihen (9) verläuft.

3. Verfahren nach Anspruch 1 oder 2,
**dadurch gekennzeichnet, dass**
die zweite Fahrtrajektorie (15) im Vergleich zur ersten Fahrtrajektorie (16) zumindest abschnittsweise einen geringeren Abstand zu der einen der Stellplatzreihen (9) aufweist.

4. Verfahren nach einem der vorhergehenden Ansprüche,
**dadurch gekennzeichnet, dass**
die Umfelddaten von zumindest einem Umfeldsensor des Kraftfahrzeugs (1) bereitgestellt werden.

5. Verfahren nach einem der vorhergehenden Ansprüche,
**dadurch gekennzeichnet, dass**
die Umfelddaten in einer externen Datenbank gespeichert sind und zu der Empfangseinrichtung (3) des Kraftfahrzeugs (1) übertragen werden.

6. Verfahren nach einem der vorhergehenden Ansprüche,
**dadurch gekennzeichnet, dass**
zusätzlich zu den Umfelddaten Positionsdaten eines satellitengestützen Positionsbestimmungssystems berücksichtigt werden.

7. Verfahren nach einem der vorhergehenden Ansprüche,
**dadurch gekennzeichnet, dass**
das Kraftfahrzeug (1) auf der Parkfläche (8) bewegt wird und die erste und/oder die zweiten Fahrtrajektorie (15, 16) vor einem Einfahren des Kraftfahrzeugs (1) in die zumindest eine Fahrgasse (11) ausgegeben werden.

8. Verfahren nach einem der vorhergehenden Ansprüche, wobei die erste und/oder die zweite Fahrtrajektorie (15, 16) mittels einer Anzeigeeinrichtung (6) des Kraftfahrzeugs (1) ausgegeben wird.

9. Verfahren nach einem der vorhergehenden Ansprüche,
**dadurch gekennzeichnet, dass**
die erste und/oder die zweite Fahrtrajektorie (15, 16) dem Fahrer des Kraftfahrzeugs (1) akustisch und/oder visuell ausgegeben werden.

10. Verfahren nach einem der vorhergehenden Ansprüche,
**dadurch gekennzeichnet, dass**
in Abhängigkeit von der ersten und/oder der zweiten Fahrtrajektorie (15, 16) mittels einer Steuereinrichtung (7) des Kraftfahrzeugs (1) an eine Lenkeinrichtung, eine Antriebseinrichtung und/oder eine Bremsanlage des Kraftfahrzeugs (1) gesendet wird.

11. Verfahren nach einem der vorhergehenden Ansprüche,
**dadurch gekennzeichnet, dass**
das Kraftfahrzeug (1) in Abhängigkeit von der ersten und/oder der zweiten Fahrtrajektorie (15, 16) semi-autonom manövriert wird.

12. Verfahren nach einem der Ansprüche 1 bis 10,
**dadurch gekennzeichnet, dass**
das Kraftfahrzeug (1) in Abhängigkeit von der ersten und/oder der zweiten Fahrtrajektorie (15, 16) autonom manövriert wird.

13. Fahrerassistenzsystem (2) für ein Kraftfahrzeug (1), welches dazu ausgebildet ist ein Verfahren nach einem der vorhergehenden Ansprüche durchzuführen.

14. Kraftfahrzeug (1) mit einem Fahrerassistenzsystem (2) nach Anspruch 13.

## Claims

1. Method for assisting a driver when parking a motor vehicle (1), having the steps of:
- positioning the motor vehicle (1) in a parking area (8) which has a plurality of rows (9) of parking spaces each with a plurality of parking spaces (10) for the motor vehicle (1) and a plurality of driving lanes (11) for approaching the rows (9) of parking spaces (S1),
- using a receiving device (3) of the motor vehicle (1) to receive environmental data which describe an environment (4) of at least one of the driving lanes (11),
**characterized by** the following further steps of
- using an evaluation device (5) of the motor vehicle (1) to determine whether the at least one of the driving lanes (11) is bounded on one side or on both sides by one of the rows (9) of parking spaces in each case on the basis of the received environmental data (S2),
- outputting a first driving trajectory (16) for a drive along the at least one driving lane (11) if the at least one of the driving lanes (11) is bounded on both sides by one of the rows (9) of parking spaces in each case, and
- outputting a second driving trajectory (15) for a drive along the at least one driving lane (11) if the at least one driving lane (11) is bounded on one side by one of the rows (9) of parking spaces.

2. Method according to Claim 1,
**characterized in that**
the first driving trajectory (16) runs centrally between rows (9) of parking spaces, at least in sections.

3. Method according to Claim 1 or 2,
**characterized in that**
the second driving trajectory (15) is at a shorter distance from the one of the rows (9) of parking spaces than the first driving trajectory (16), at least in sections.

4. Method according to one of the preceding claims,
**characterized in that**
the environmental data are provided by at least one environmental sensor of the motor vehicle (1).

5. Method according to one of the preceding claims,
**characterized in that**
the environmental data are stored in an external database and are transmitted to the receiving device (3) of the motor vehicle (1).

6. Method according to one of the preceding claims,
**characterized in that**
in addition to the environmental data, position data from a satellite-based positioning system are taken into account.

7. Method according to one of the preceding claims,
**characterized in that**
the motor vehicle (1) is moved in the parking area (8) and the first and/or second driving trajectory (15, 16) is/are output before the motor vehicle (1) drives into the at least one driving lane (11).

8. Method according to one of the preceding claims, the first and/or second driving trajectory (15, 16) being output by means of a display device (6) of the motor vehicle (1).

9. Method according to one of the preceding claims,
**characterized in that**
the first and/or second driving trajectory (15, 16) is/are acoustically and/or visually output to the driver of the motor vehicle (1).

10. Method according to one of the preceding claims,
**characterized in that**
transmission is carried out to a steering device, a drive device and/or a brake system of the motor vehicle (1) by means of a control device (7) of the motor vehicle (1) on the basis of the first and/or second driving trajectory (15, 16).

11. Method according to one of the preceding claims,
**characterized in that**
the motor vehicle (1) is semi-autonomously manoeuvred on the basis of the first and/or second driving trajectory (15, 16).

12. Method according to one of Claims 1 to 10,
**characterized in that**
the motor vehicle (1) is autonomously manoeuvred on the basis of the first and/or second driving trajectory (15, 16).

13. Driver assistance system (2) for a motor vehicle (1), which is designed to carry out a method according to one of the preceding claims.

14. Motor vehicle (1) having a driver assistance system (2) according to Claim 13.

## Revendications

1. Procédé d'assistance d'un conducteur lors du stationnement d'un véhicule automobile (1), comportant les étapes consistant à :
- positionner le véhicule automobile (1) sur une zone de stationnement (8) qui comporte (S1) une pluralité de rangées de places de stationnement (9) respectivement munies d'une pluralité d'emplacements de stationnement (10) pour le véhicule automobile (1) et une pluralité de jalonnages (11) destinés à la conduite vers les rangées de places de stationnement (9),
- recevoir des données d'environnement qui décrivent un environnement (4) d'au moins l'un des jalonnages (11), au moyen d'un dispositif de réception (3) du véhicule automobile (1),
**caractérisé par** les étapes supplémentaires consistant à :
- déterminer si l'au moins un des jalonnages (11) est respectivement délimité d'un côté ou des deux côtés par l'une des rangées de places de stationnement (9), sur la base des données d'environnement reçues, au moyen d'un dispositif d'évaluation (5) du véhicule automobile (1) (S2),
- fournir en sortie une première trajectoire de conduite (16) pour une conduite le long de l'au moins un jalonnage (11) dans le cas où l'au moins un des jalonnages (11) est respectivement délimité des deux côtés par l'une des rangées de places de stationnement (9), et
- fournir en sortie une deuxième trajectoire de conduite (15) pour une conduite le long de l'au moins un jalonnage (11) dans le cas où l'au moins un jalonnage (11) est délimité d'un côté par une rangée de places de stationnement (9).

2. Procédé selon la revendication 1,
**caractérisé en ce que** la première trajectoire de conduite (16) s'étend au moins par sections en position centrale entre des rangées de places de stationnement (9).

3. Procédé selon la revendication 1 ou 2,
**caractérisé en ce que** la deuxième trajectoire de conduite (15) présente, au moins par sections, une plus faible distance à l'une des rangées de places de stationnement (9), par comparaison à la première trajectoire de conduite (16).

4. Procédé selon l'une quelconque des revendications précédentes,
**caractérisé en ce que** les données d'environnement sont fournies par au moins un capteur d'environnement du véhicule automobile (1).

5. Procédé selon l'une quelconque des revendications précédentes,
**caractérisé en ce que** les données d'environnement sont stockées dans une banque de données externe et sont transmises au dispositif de réception (3) du véhicule automobile (1).

6. Procédé selon l'une quelconque des revendications précédentes,
**caractérisé en ce que** des données de position d'un système de détermination de position par satellite sont prises en compte en plus des données d'environnement.

7. Procédé selon l'une quelconque des revendications précédentes,
**caractérisé en ce que** le véhicule automobile (1) est déplacé sur la zone de stationnement (8) et **en ce que** la première et/ou la deuxième trajectoire de conduite (15, 16) est/sont fournie (s) en sortie avant que le véhicule automobile (1) soit dirigé dans l'au moins un jalonnage (11).

8. Procédé selon l'une quelconque des revendications précédentes, dans lequel la première et/ou la deuxième trajectoire de conduite (15, 16) est/sont fournie(s) en sortie au moyen d'un dispositif d'affichage (6) du véhicule automobile (1) .

9. Procédé selon l'une quelconque des revendications précédentes,
**caractérisé en ce que** la première et/ou la deuxième trajectoire de conduite (15, 16) est/sont fournie(s) en sortie au conducteur du véhicule automobile (1) de manière acoustique et/ou visuelle.

10. Procédé selon l'une quelconque des revendications précédentes,
**caractérisé en ce qu'**un envoi est effectué à un dispositif de direction, à un dispositif d'entraînement et/ou à un système de freinage du véhicule automobile (1) en fonction de la première et/ou de la deuxième trajectoire de conduite (15, 16) au moyen d'un dispositif de commande (7) du véhicule automobile (1).

11. Procédé selon l'une quelconque des revendications précédentes,
**caractérisé en ce que** le véhicule automobile (1) est manoeuvré de manière semi-autonome en fonction de la première et/ou de la deuxième trajectoire de conduite (15, 16).

12. Procédé selon l'une quelconque des revendications 1 à 10,
**caractérisé en ce que** le véhicule automobile (1) est manoeuvré de manière autonome en fonction de la première et/ou de la deuxième trajectoire de conduite (15, 16).

13. Système d'assistance au conducteur (2) destiné à un véhicule automobile (1), qui est conçu pour mettre en oeuvre un procédé selon l'une quelconque des revendications précédentes.

14. Véhicule automobile (1) comportant un système d'assistance au conducteur (2) selon la revendication 13.
